# EUROPEAN PATENT SPECIFICATION

(11) **EP 2 085 664 B1**
(45) Date of publication and mention of the grant of the patent: **18.09.2013**
(21) Application number: 09250252.5
(22) Date of filing: 30.01.2009
(51) Int. Cl.: F16H 63/34, F16H 63/02, F16H 63/10, F16H 63/30, F16H 63/36

(54) **Operating mechanism of a manual transmission**
Betriebsmechanismus eines Handschaltgetriebes
Mécanisme de fonctionnement d'une transmission manuelle

(30) Priority: 31.01.2008 JP 2008021285
(43) Date of publication of application: 05.08.2009
(73) Proprietor: TOYOTA JIDOSHA KABUSHIKI KAISHA, Toyota-shi, Aichi-ken, 471-8571 (JP)
(72) Inventor: Nakahara, Yoshihito, Toyota-shi Aichi-ken 471-8571 (JP); Fujii, Akihiro, Toyota-shi Aichi-ken 471-8571 (JP); Nishimura, Shigeto, Toyota-shi Aichi-ken 471-8571 (JP)
(74) Representative: Albutt, Anthony John

(56) References cited:
- EP-A2- 2 085 663
- DE-A1- 3 231 428
- FR-A1- 2 838 176
- GB-A- 1 056 206
- GB-A- 1 065 364
- JP-A- 3 009 170
- JP-A- 2000 179 688
- US-A- 4 337 675

## Description

### BACKGROUND OF THE INVENTION

### 1. Field of the Invention

The invention relates to an operating mechanism of a manual transmission, which selects and shifts (i.e., operates) one of a plurality of shift fork shafts in response to operation of an operating lever in a shift direction and a select direction. More particularly, the invention relate to an operating mechanism of a manual transmission, which is provided with an interlock mechanism to prevent double engagement of gears.

### 2. Description of the Related Art

Vehicular manual transmissions which establish a gear corresponding to operational input to an operating lever by selecting one of a plurality of shift fork shafts in response to operation of the operating lever in a shift direction and a select direction and moving the selected shift fork shaft in the axial direction, and which are provided with an interlock mechanism to prevent double engagement on the gear side, are in heavy use.

Japanese Patent Application Publication No. 9-207596 (JP-A-9-207596), for example, describes one such operating mechanism in which, for example, a select lever is supported so that it can pivot in the select direction on a set board that is fixed to a floor, and a base end portion of the operating lever is supported on the select lever so that it can rotate in the shift direction. This operating mechanism suppresses rattling (i.e., the amount of play) when an operating lever is in a middle position by offsetting a retaining groove, which retains a torsion coil spring that urges the select lever into a neutral position, in the set board with respect to an engaging groove in the select lever.

Also, Japanese Patent Application Publication No. 2007-132358 (JP-A-2007-132358), for example, describes technology in which an interlock member that prevents double engagement transmits operating force to an inner lever used in a select operation while inhibiting the inner lever from rattling in the select direction.

Moreover, Japanese Patent Application Publication No. 2006-266467 (JP-A-2006-266467), for example, describes technology that makes it easier to feel the shift position during an operation by providing a detent mechanism that guides an interlock plate, which restricts a shift head of a non-selected shift fork shaft to a neutral position in the select direction, into a neutral position by a guide member fastened to a case, and pushes a lock ball into a groove on the inner lever side by spring force between that interlock plate and the inner lever.

In addition, Japanese Patent Application Publication No. 2006-2905 (JP-A-2006-2905), for example, describes technology for inhibiting a shift lever from rattling in each shift position by pushing a ball from a transmission case side using a spring into a groove and a concave portion provided on an interlock plate. Also, Japanese Patent Application Publication No. 2005-90710 (JP-A-2005-90710), for example, describes technology in which an interlock member is mounted to a shift select shaft in such a manner that it can move in the axial direction but is unable to rotate. Further, Japanese Utility Model Application Publication No. 7-35854 (JP-U-7-35854), for example, describes technology in which an interlock plate that is perpendicular to a shift fork shaft is provided near a detent mechanism on the axial end side of a shift fork shaft.

However, with the operating mechanisms according to the related art described above, although the technology in which the interlock member transmits operating force in the select direction is mechanically simple, the other technologies involve complex structures for inhibiting rattling of the operating lever, which raises costs and reduces reliability.

Also, even with the technology in which the interlock member transmits operating force in the select direction, although rattling in the select direction (i.e., the rotational direction) can be suppressed without impairing the interlock function, after rattling is suppressed by the force of the select operation, a twisting phenomenon occurs in which the interlock member that is rotated or tilted in the select direction leans in the axial direction of the shift select shaft (i.e., the direction in which pressure is applied from the select lever) by the amount of the gap necessary to allow for sliding between the interlock member and the inner lever used for a select operation. Accordingly, the engagement posture of the spherical portion on the tip end side of the select lever and the operational input surface of the interlock member that sandwiches that spherical portion changes. As a result, rattling occurs in the select direction after a shift.

To prevent this, it is possible to reduce the space between the interlock member and the inner lever used for a select operation or the shift select shaft, but if this sliding space is too narrow, the frictional force will increase and so-called "pinching" will occur, thus requiring more select operating force.
European Patent Application EP 2085663 relates to a speed ratio change operation device and transmission. Japanese Patent Application JP 3009170 relates to a speed change device for gear type transmission, which comprises a first sliding portion that protrudes toward an interlock member from the case member on the other side so as to be slidably engage with a pair of shift operation restricting portions of the interlock member and a second sliding portion formed near an outer peripheral wall of the case member on the other side so as to slidably engage with a select operation input portion of the interlock member. However said speed change device does not disclose that the first sliding portion is formed by a pair of protrusions which are positioned on a rib formed on the case member on the other side near the butt surface.

### SUMMARY OF THE INVENTION

In view of the problems with the related art described above, this invention thus provides an operating mechanism of a manual transmission with a superb shift feel, in which rattling due to play in an operating lever, and more specifically, rattling in the select direction after a shift, is suppressed by reliably preventing an interlock member which transmits operating force in the select direction from leaning in the axial direction without requiring more operating force.

Therefore, a first aspect of the invention relates to an operating mechanism of a manual transmission, which includes a transmission case; a plurality of shift fork shafts, each of which has a shift fork and a shift head portion, which are arranged parallel to each other inside the transmission case; a shift select shaft which is operated in an axial direction by operational input in a shift direction, and operated in a rotational direction by operational input in a select direction; an inner lever which is fixed to the shift select shaft so as to protrude perpendicular to the axis thereof and engages with one of the shift head portions of the plurality of shift fork shafts according to the operating position of the shift select shaft in the rotational direction; and an interlock member which restricts the shift head portions other than the one shift head portion from being erroneously operated in the axial direction from a neutral position by the inner lever. when the shift select shaft is operated in the axial direction by operational input in the shift direction. In this operating mechanism, a guide portion on one side, which engages with the interlock member from one side in the axial direction of the shift select shaft, and a guide portion on the other side, which engages with the interlock member from the other side in the axial direction of the shift select shaft, are provided on the transmission case. Further, the interlock member is guided in a posture perpendicular to the shift select shaft by the guide portion on the one side and the guide portion on the other side.

According to this structure, the interlock member is guided in a posture perpendicular to the shift select shaft, i.e., in a posture in which it is rotated on a plane that is perpendicular to the shift select shaft, by the guide portion on one side from one side in the axial direction of the shift select shaft and by the guide portion on the other side from the other side in the axial direction of the shift select shaft. Therefore, it is possible to prevent the interlock member, which transmits operating force in the select direction, from leaning in the axial direction without requiring more select operating force. Also, the select position is more apparent (i.e., easier to feel) so a shift mistake can be prevented. In addition, the interlock member is able to be guided when it is assembled into the transmission case, which also makes it easier to mount the shift select shaft.

Also, in the operating mechanism described above, the interlock member includes i) a pair of shift operation restricting portions arranged adjacent to, with one on either side of, the inner lever in the rotational direction of the shift select shaft so as to engage with one of the shift head portions, ii) a connecting portion that connects both of the shift operation restricting portions together, and iii) a select operation input portion which is fixed to the connecting portion and operated in the rotational direction. Further, at least one of the guide portion on the one side and the guide portion on the other side may be slidably engaged with the interlock member near the pair of shift operation restricting portions and the select operation input portion of the interlock member.

According to this structure, the interlock member is slidably guided by the guide portion on one side from one side in the axial direction of the shift select shaft, and by the guide portion on the other side near the select operation input portion and the pair of shift operation restricting portions from the other side in the axial direction. Therefore, the interlock member, which transmits operating force in the select direction, can be prevented from leaning in the axial direction without requiring more select operating force.

Also, in the operating mechanism described above, the transmission case is formed by a case member on one side, which includes the guide portion on the one side, and a case member on the other side, which includes the guide portion on the other side. Further, the guide portion on the one side and the guide portion on the other side may be positioned near a butt surface of the case member on the one side and the case member on the other side.

According to this structure, the guide portion on one side and the guide portion on the other side which are positioned near the butt surface of the case member on one side and the case member on the other side can serve as sliding portions for guiding, which can easily be machined so as to be parallel with the butt surface under the same working conditions as the butt surface. As a result, the guide portions on the one side and the other side can be formed inexpensively without increasing the number of parts.

Also, in the operating mechanism described above, one of the guide portion on the one side and the guide portion on the other side is formed by i) a first sliding portion that protrudes toward the interlock member from the case member on the other side so as to slidably engage with the pair of shift operation restricting portions of the interlock member, and ii) a second sliding portion formed near an outer peripheral wall of the case member on the other side so as to slidably engage with the select operation input portion of the interlock member.

According to this structure, the interlock member is guided at three points by one of the guide portions, thereby making it possible to prevent the interlock member from leaning in the axial direction. Moreover, that guide portion can be formed accurately and inexpensively.

Also, in the operating mechanism described above, the first sliding portion is formed by a pair of protrusions which are positioned on a rib formed on the case member on the other side near the butt surface and which slidably engage with the pair of shift operation restricting portions of the interlock member.

According to this structure, the first sliding portion can be easily provided on an existing rib by slightly cutting into the forming die of the case, for example.

Also, in the operating mechanism described above, the pair of protrusions may be positioned on the same circumference.

In this case, machining of the sliding surfaces of the pair of protrusions can be simplified and stable guides for the interlock member can be obtained.

Also, in the operating mechanism described above, the guide portion on the one side may slidably engage near the select operation input portion.

According to this structure, the guide portion on the one side takes the operating force applied to that select operation input portion so the interlock member is prevented from leaning in the axial direction.

Also, in the operating mechanism described above, the transmission case may include a radial inner sliding portion that slidably engages with the pair of shift operation restricting portions of the interlock member on a circumference of a first radius, and a radially outer sliding portion that slidably engages with the select operation input portion of the interlock member on a circumference of a second radius that is larger than the first radius.

According to this structure, the interlock member is inhibited from leaning in the axial direction from operating force applied to the select operation input portion by the radial outer sliding portion which has a larger radius. As a result, contact pressure between the interlock member and the guide portion on one side is reduced, thereby reliably preventing the interlock member from leaning.

Furthermore, in the operating mechanism described above, the select operation input portion may be operated by a select lever that rotates about an axis that is perpendicular to the shift select shaft from the other side of the butt surface.

According to this structure, the interlock member is pushed in a direction in which it would lean in the axial direction of the shift select shaft from the select lever side. However, the guide portion on the one side and the guide portion on the other side only allow the interlock member to rotate on their sliding planes. Therefore, the twisting phenomenon in which the interlock member that is rotated or tilted in the select direction also leans in the axial direction tends not to occur, thereby solving the problem of rattling in the select direction which occurs due to a change in the engagement posture of the spherical engaging portion on the tip end of the inner select lever and the operation input surfaces of the interlock member that sandwich that spherical engagement portion.

According to this invention, the interlock member is guided in a posture perpendicular to the shift select shaft by the guide portion on one side from one side in the axial direction of the shift select shaft, and by the guide portion on the other side from the other side in the axial direction of the shift select shaft. Therefore, the interlock member, which transmits operating force in the select direction, can be reliably prevented from leaning in the axial direction without requiring more select operating force. As a result, an operating mechanism of a manual transmission which has a superb shift feel and in which rattling caused by play in the operating lever, particularly rattling in the select direction after a shift, is minimal can be provided.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is a front sectional view of the main portions of an operating mechanism of a manual transmission according to an example embodiment of the invention;
FIG 2 is a side sectional view of the main portions of the operating mechanism of a manual transmission according to the example embodiment;
FIG 3 is a perspective view schematically showing the structure of the operating mechanism of a manual transmission according to the example embodiment;
FIG. 4 is a side view schematically showing the structure of the operating mechanism of a manual transmission according to the example embodiment;
FIG. 5 is a perspective view of the area near an interlock member of the operating mechanism of a manual transmission according to the example embodiment;
FIG 6 is a front sectional view of the area near a select operation portion of the operating mechanism of a manual transmission according to the example embodiment; and
FIG. 7 is a front view of the main portions of another case member, which shows a guide portion on the other side in the operating mechanism of a manual transmission according to the example embodiment.

### DETAILED DESCRIPTION OF EMBODIMENTS

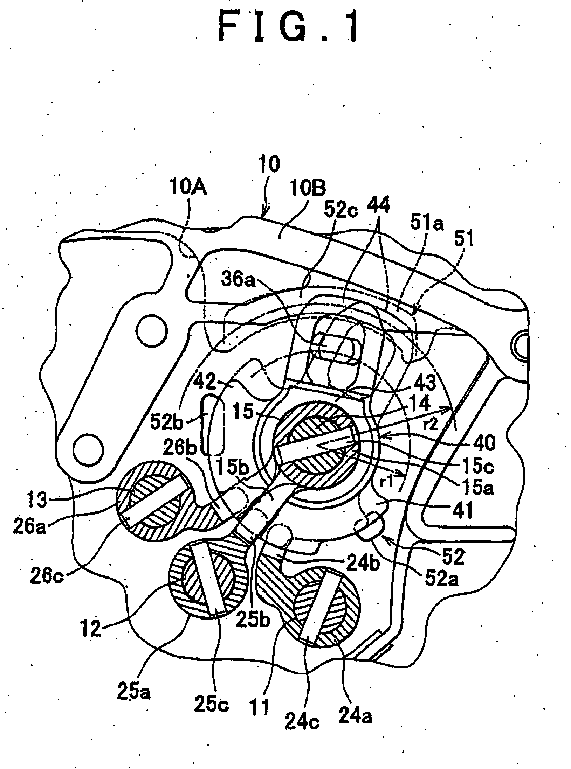

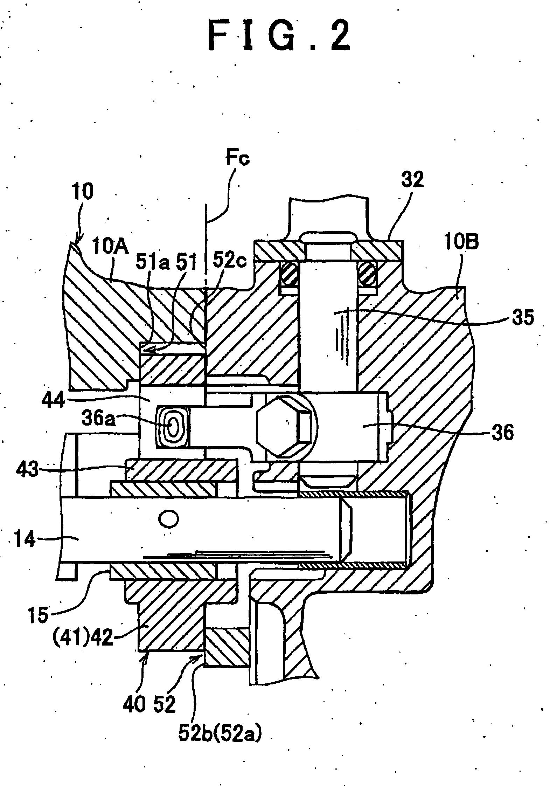

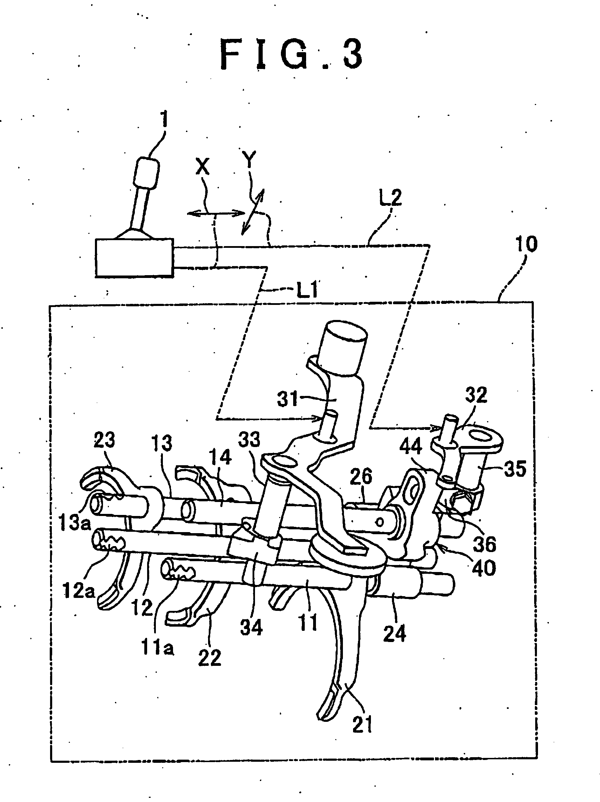

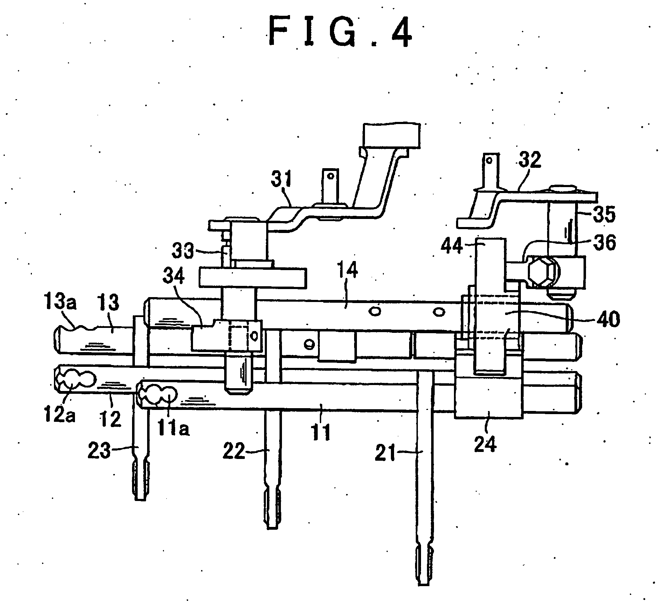

Example embodiments of the present invention will be described in greater detail below with reference to the accompanying drawings. FIG 1 is a front sectional view of the main portions of an operating mechanism of a manual transmission according to an example embodiment of the invention. FIG 2 is a side sectional view of the main portions of the operating mechanism of a manual transmission according to the example embodiment. FIG. 3 is a perspective view schematically showing the structure of the operating mechanism of a manual transmission according to the example embodiment, and FIG 4 is a side view schematically showing the structure of the operating mechanism of a manual transmission according to the example embodiment

First the structure will be described. As shown in FIGS. 1 to 4, the operating mechanism of a manual transmission according to this example embodiment includes i) an operating lever 1 which is operated in a shift direction (e.g., the longitudinal direction of the vehicle, as shown by the X in the FIG. 3) and a select direction (e.g., the width direction of the vehicle, as shown by the Y in FIG 3), ii) a transmission case 10, iii) a plurality of shift fork shafts 11, 12, and 13 which are arranged parallel to one another inside the transmission case 10 and are supported by the transmission case 10 in such a manner that they are each able to move in the axial direction, and iv) a shift select shaft 14 that is arranged parallel to the shift fork shafts 11 to 13 inside the transmission case 10 and which is operated in the axial direction when the operating lever 1 is operated in the shift direction (i.e., by operational input of the operating lever 1 in the shift direction), and is operated in the rotational direction when the operating lever 1 is operated in the select direction (i.e., by operational input of the operating lever 1 in the select direction). Incidentally, in the description below, the position of each of the shift fork shafts 11 to 13 and the shift select shaft 14 when the operating lever 1 is in the neutral position (i.e., the middle position) will be referred to as "neutral position."

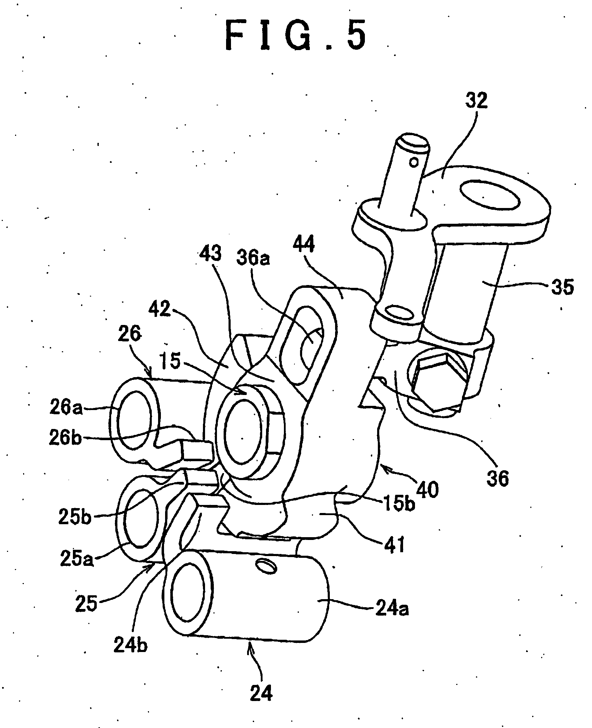

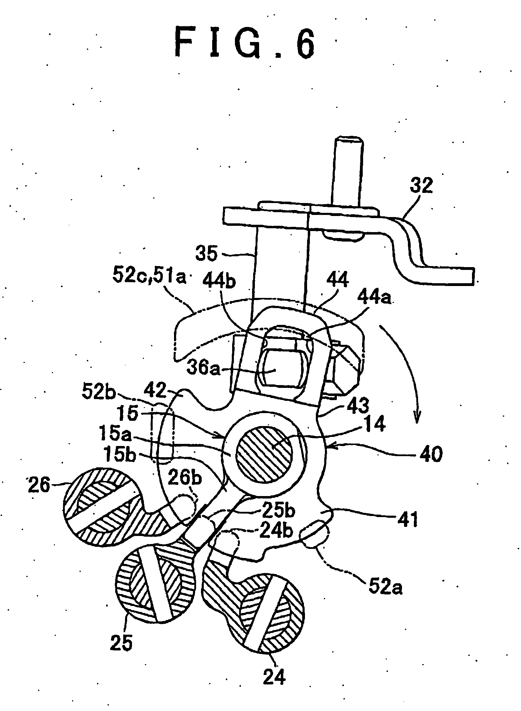

FIG 5 is a perspective view of the area near an interlock member of the operating mechanism of a manual transmission according to the example embodiment, and FIG 6 is a front sectional view of the area near a select operation portion.

As shown in FIGS. 3 to 6, bifurcated shift forks 21, 22, and 23 and shift head portions 24, 25, and 26 having generally U-shaped head shapes are mounted on the plurality of shift fork shafts 11 to 13.

Although not shown in detail, the shift forks 21 to 23 slidably engage with an outer peripheral annular groove in a sleeve (such as a portion of a synchronous mesh mechanism) for selectively establishing a gear transmission path that establishes two gears from among multiple gears. When one of the plurality of shift fork shafts 11 to 13 is operated in the axial direction from the neutral position, the gear transmission path of one of the two gears to which the shift fork 21, 23, or 23 that moves together with the operated shift fork shaft 11, 12, or 13 corresponds is established.

More specifically, for example, first gear or second gear is established by moving the first shift fork shaft 11 and the shift fork 21 out of the neutral position in the axial direction (i.e., in the shift direction), i.e., by a shift operation. Also, third gear or fourth gear is established by a shift operation that involves moving the second shift fork shaft 12 and the shift fork 22 out of the neutral position, and fifth gear or sixth gear is established by a shift operation that involves moving the third shift fork shaft 13 and the shift fork 23 out of the neutral position.

Each shift head portion 24 to 26 is formed of a cylindrical portion 24a, 25a, and 26a, a head pawl portion 24b, 25b, and 26b, and a securing pin 24c, 25c, and 26c, respectively, as shown in FIG. 1. The cylindrical portions 24a, 25a, and 26a fit over the shift fork shafts 11 to 13 at the same position in the axial direction of the shift fork shafts 11 to 13. The head pawl portions 24b, 25b, and 26b are integrally formed with the cylindrical portions 24a to 26a, respectively, so that they protrude at right angles to the axes of the shift fork shafts 11 to 13 (i.e., in a direction orthogonal to the axes), and are U-shaped with the depression formed in the direction in which they protrude (see FIG 5). The securing pins 24c, 25c, and 26c fit through both the cylindrical portions 24a to 26a and the shift fork shafts 11 to 13 at a right angle to the axes so as to secure the cylindrical portions 24a to 26a to the shift fork shafts 11 to 13.

Incidentally, as shown in FIGS. 3 and 4, a plurality detent engaging portions 11a, 12a, and 13a are formed on the plurality of shift fork shafts 11 to 13. These detent engaging portions 11a, 12a, and 13a are formed by concave portions that are recessed from the outer peripheral surfaces of the shift fork shafts 11 to 13. Each of the shift fork shafts 11 to 13 is kept still so as not to rattle in the neutral position or any gear position that is selected by a detent mechanism, not shown, that engages with one of the concave portions of the plurality of detent engaging portions 11a to 13a.

Meanwhile, the shift select shaft 14 is driven by an outer shift lever 31 and an outer select lever 32. The outer shift lever 31 is drivingly connected to the operating lever 1 side via operation linkage L1 so that it rotates in response to the operating lever 1 being operated in the shift direction. The outer select lever 32 is drivingly connected to the operating lever 1 side via operating linkage L2 so that it rotates in response to the operating lever 1 being operated in the select direction. Here, the outer shift lever 31 is rotatably supported by the transmission case 10 via a spindle 33, and is able to shift-operate the shift select shaft 14 in the axial direction via the inner shift lever 34 that is mounted on the spindle 33. Also, the outer select lever 32 is rotatably supported by the transmission case 10 via a spindle 35, and is able to select-operate the shift select shaft 14 in the rotational direction via an inner select lever 36 mounted on the spindle 35.

More specifically, an inner lever 15 used for a select operation is fixed to the shift select shaft 14 so that it protrudes at a right angle to the axis of the shift select shaft 14. This inner lever 15 is engaged with an appropriate one of the shift head portions 24 to 26 of the shift fork shafts 11 to 13. The inner lever 15 is formed by a cylindrical portion 15a, a select pawl portion 15b, and a securing pin 15c. The cylindrical portion 15a fits over the shift select shaft 14 in a position near the head pawl portions 24b to 26b of the shift head portion 24 to 26 in the axial direction of the shift select shaft 14. The head pawl portion 15b is formed integral with the outer peripheral side of the cylindrical portion 15a so that it protrudes at a right angle to the axis of the shift select shaft 14, within a range in which the length in the axial direction is slightly shorter than the inside width of the U-shaped concave portion of each head pawl portion 24b to 26b. The securing pin 15c fits through both the cylindrical portion 15a and the shift selector shaft 14 at a right angle to the axis so as to secure the cylindrical portion 15a to the shift select shaft 14.

The inner lever 15 engages with one of the plurality of shift head portions 14, 25, or 26 according to a select operation of the shift select shaft 14 in the rotational direction such that, when the shift select shaft 14 which supports that inner lever 15 is shift-operated in the axial direction, one of the shift fork shafts 11, 12, or 13 is moved in the axial direction together with the shift select shaft 14 via that one shift head portion 24, 25, or 26, thereby enabling one of the two gears corresponding to that shift fork shaft 11,12, or 13 to be established.

An interlock member 40 is provided adjacent to the inner lever 15 and near the shift head portions 24 to 26 of the shift fork shafts 11 to 13.

As shown in FIGS. 5 and 6, the interlock member 40 has i) a pair of shift operation restricting portions 41 and 42 arranged adjacent to, with one on either side of, the inner lever 15 in the rotational direction of the shift select shaft 14 so as to engage with one of the shift head portions 24 to 26, ii) a connecting portion 43 that connects both of the shift operation restricting portions 41 and 42 together, and iii) a select operation input portion 44 that is fixed to the connecting portion 43 and is operated in the rotational direction.

The pair of shift operation restricting portions 41 and 42 are arranged in positions in the axial direction within the U-shaped concave portions of the head pawl portions 24b to 26b of the shift head portions 24 to 26, on both sides of the select pawl portion 15b of the inner lever 15 such that the pair of shift operation restricting portions 41 and 42 engage with the two non-selected shift head portions 24 to 26 of the shift fork shafts 11 to 13 that are not engaged with the inner lever 15. The interlock member 40 then restricts the shift head portions other than the one shift head portion 24, 25, or 26 that is engaged with the select pawl portion 15b of the inner lever 15 from being erroneously moved in the axial direction from the neutral position by the inner lever 15 when the shift select shaft 14 is operated in the axial direction by operational input in the shift direction, thereby preventing double engagement of the gears.

Also, when operating force is applied by the inner select lever 36 to the select operation input portion 44 in the select direction such that the shift select shaft 14 is select-operated in the rotational direction together with the inner lever 15, the pair of shift operation restricting portions 41 and 42 transmit the operating force in that rotational direction to the inner lever 15 via the select pawl portion 15b that is sandwiched between the two shift operation restricting portions 41 and 42.

Therefore, when the shift select shaft 14 is shift-operated in the axial direction, the interlock member 40 enables only one of the plurality of shift fork shafts 11 to 13, which ever corresponds to the select operation, to move in the axial direction from the neutral position via only one shift head portion 24, 25, or 26.

The select operation input shaft 44 has a pair of parallel operation input surfaces 44a and 44b that oppose on another across a spherical engaging portion 36a on the tip end side of the inner select lever 36. The distance between the two operation input surfaces 44a and 44b is just slightly larger than the diameter of the spherical engaging portion 36a of the inner select lever 36 (by the approximately the amount of space to allow for sliding). Incidentally, the spherical engaging portion 36a on the tip end side of the inner select lever 36 is generally barrel-shaped to form a sphere where it contacts the operation input surface 44a and 44b and therearound. The pair of operation input surfaces 44a and 44b are flat surfaces that are parallel with each other where they contact the spherical engaging portion 36a of the inner select lever 36 and therearound.

As shown in FIGS. 1 and 2, the transmission case 10 has guide portion 51 (indicated by the broken line in FIG 1) on one side that slidably engages with a portion of the interlock member 40 from one side in the axial direction of the shift select shaft 14, and guide portion 52 on the other side that slidably engages with the interlock member 40 near the select operation input portion 44 and the pair of shift operation restricting portions 41 and 42 of the interlock member 40 from the other side in the axial direction of the shift select shaft 14. The guide portion 51 on the one side and the guide portion 52 on the other side are formed such that they are able to support the interlock member 40 at three points, e.g., first sliding portions 52a and 52b and a second sliding portion 52c of the guide portion 52 on the other side, on at least one side so as to guide the interlock member 40 in a posture perpendicular to the shift select shaft 14, i.e., in a rotational posture on a virtual plane that is orthogonal to the shift select shaft 14.

More specifically, the transmission case 10 is formed by a case member 10A on one side, which includes the guide portion 51 on the one side, and a case member 10B on the other side, which includes the guide portion 52 on the other side. The guide portion 51 on the one side and the guide portion 52 on the other side are both positioned near a butt surface Fc of the case member 10A on the one side and the case member 10B on the other side.

The guide portion 51 on the one side has a generally arc-shaped sliding surface 51 a that is formed along the entire rotating area of the outer end portion of the select operation input portion 44 and which is positioned on a plane facing the butt surface Fc of the case member 10A on the one side and the case member 10B on the other side, for example, as shown by the broken line in FIG 1.

Also, the guide portion 52 on the other side is formed by the first sliding portions 52a and 52b and the second sliding portion 52c. The first sliding portions 52a and 52b protrude toward the interlock member 40 from the case member 10B on the other side so as to slidably engage with the pair of shift operation restricting portions 41 and 42 of the interlock member 40. The second sliding portion 52c is formed near the outer peripheral wall of the case member 10B on the other side so as to slidably engage with the outer end portion of the select operation input portion 44 of the interlock member 40.

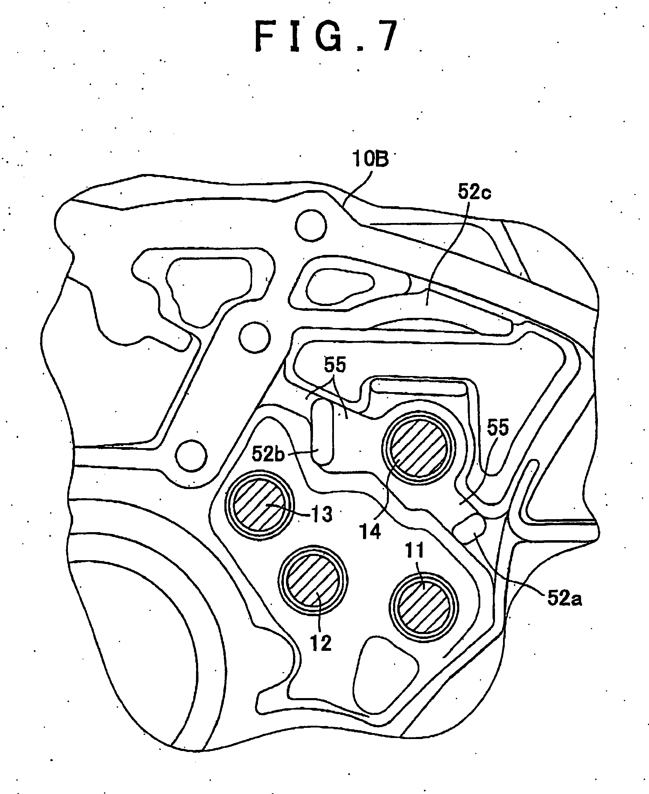

FIG 7 is a front view of the main portions of the other case member, which shows the guide portion on the other side in the operating mechanism of a manual transmission according to the example embodiment.

The first sliding portions 52a and 52b of the guide portion 52 on the other side are positioned on a rib 55 provided on the case member 10B on the other side near the butt surface Fc, and are structured as a pair of protrusions that slidably engage with the pair of shift operation restricting portions 41 and 42, respectively, of the interlock member.40. The tip end surfaces of the first sliding portions 52a and 52b that oppose that shift operation restricting portions 41 and 52 are generally flat. The pair of sliding portions 52a and 52b, which are protrusions, are positioned on the same circumference.

Also, the sliding surface 51a of the guide portion 51 on the one side is formed parallel to the butt surface Fc and separated from the butt surface Fc by a distance that is slightly greater than the thickness of the select operation input portion 44 of the interlock member 40 (i.e., than the length of the select operation input portion 44 in the axial direction of the shift select shaft 14). The select operation input portion 44 is sandwiched between this sliding surface 51a of the guide portion 51 on one side and the second sliding portion 52c of the guide portion 52 on the other side. Small gaps on either side of the select operation input portion 44 enable it to slide.

The first sliding portions 52a and 52b provided on the case member 10B on the other side are radially inner sliding portions that slidably engage with the pair of operation restricting portions 41 and 42 of the interlock member 40 on a circumference of a first radius r1. The sliding surface 51a of the guide portion 51 provided on the case member 10A on the one side and the second sliding portion 52c provided on the case member 10B on the other side are radially outer sliding portions that slidably engage with the select operation input portion 44 of the interlock member 40 on a circumference of a second radius r2 that is larger than the first radius r1.

The select operation input portion 44 of the interlock member 40 is operated from the other side of the butt surface Fc, i.e., from the right in FIG. 2, by the inner select lever 36 that rotates (i.e., pivots) about the axis perpendicular to the shift select shaft 14 on the other side of the butt surface Fc.

Incidentally, lubricating oil (i.e., lubricant) is poured into the transmission case 10 so that the sliding portions slide in a lubricated state. Also, a seal member such as an O-ring is fitted in the shaft hole portions of the spindles 33 and 36 that extend through the transmission case 10.

Next, the operation will be described. In the operating mechanism of the manual transmission according to the example embodiment having the structure described above, the outer select lever 32 rotates according to an operation of the operating lever 1 in the select direction by the interlock member 40 being slidably guided in the select direction in a posture perpendicular to the shift select shaft 14 by the guide portion 51 on the one side from one side in the axial direction of the shift select shaft 14, and by the guide portion 52 on the other side near the select operation input portion 44 and the pair of shift operation restricting portions 41 and 42 from the other side in the axial direction of the shift select shaft 14. Therefore, the interlock member 40 which transmits select operating force is prevented from leaning in the axial direction when the inner select lever 36 pushes against the select operation input portion 44 of the interlock member 40 in the select direction.

Also, the distance between the guide portion 51 on the one side and the guide portion 52 on the other side is slightly greater than the thickness of the interlock member 40 such that an appropriate gap to allow for sliding is formed. As a result, the amount of select operating force required on the operating lever 1 side does not increase. Further, one of the plurality of shift fork shafts 11 to 13 is selected according to a select operation on the operating lever 1 side. When the selected shift fork shaft 11, 12, or 13 moves in the axial direction, the gear corresponding to the operational input to the operating lever 1 is established while double engagement on the gear side is prevented by the interlock member 40.

Therefore, the interlock member 40, which transmits operating force in the select direction, can be reliably prevented from leaning in the axial direction without requiring more select operating force. This makes it possible to provide an operating mechanism of a manual transmission having a superb shift feel with minimum rattling caused by play in the operating lever 1, particularly rattling in the select direction after a shift.

Also, inhibiting rattling in the select direction after a shift, which is caused by the interlock member 40 leaning in the axial direction, makes the select ' position more apparent, which also enables a shift mistake to be prevented. In addition, when assembling the interlock member 40 into the transmission case 10, the interlock member 40 is able to be guided in a posture perpendicular to the axis of the shift select shaft 14 by the guide portion 51 on one side and the guide portion 52 on the other side. This makes it easier to assemble the shift select shaft 14 into the transmission case 10.

Also, in this example embodiment, the transmission case 10 is formed by the case member 10A on one side which includes the guide portion 51 on the one side, and the case member 10B on the other side, which includes the guide member 52 on the other side, and the guide portion 51 on the one side and the guide portion 52 on the other side are both positioned near the butt surface Fc of the case member 10A on the one side and the case member 10B on the other side. Accordingly, the guide portions 51 and 52 on both sides can be sliding surfaces for guiding, which can easily be machined so as to be parallel with the butt surface Fc under the same working conditions as the butt surface Fc.

Moreover, in this example embodiment, the guide portion 52 on the other side is formed by the first sliding portions 52a and 52b, which protrude toward the interlock member 40 from the case member 10B on the other side so as to slidably engage with the pair of shift operation restricting portions 41 and 42 of the interlock member 40, and the sliding portion 52c which is formed near the outer peripheral wall of the case member 10B on the other side so as to slidably engage with the select operation input portion 44 of the interlock member 40. As a result, the interlock member 40 is supported at three points and guided along flat surfaces of the guide portions 52, thereby preventing the interlock member 40 from leaning in the axial direction, e.g., preventing the portions below shift operation restricting portions 41 and 42 from leaning or tilting. Also, the guide portion 52 on the other side can also be formed accurately and inexpensively.

Also, the first sliding portions 52a and 52b are positioned on the rib 55 provided on the case member 10B on the other side near the butt surface Fc, and are formed by a pair of protrusions that slidably engage with the pair of shift operation restricting portions 41 and 42 of the interlock member 40. As a result, these first sliding portions 52a and 52b can easily be provided on the existing rib 55 by slightly cutting into the forming die of the case member 10B of the other side, for example. Accordingly, sliding portions 52a and 52b can be formed accurately and inexpensively, and also provide additional strength. Moreover, the pair of protrusions that form the first sliding portions 52a and 52b are positioned on the same circumference of the first radius r1. Therefore, the sliding surfaces of the pair of protrusions which are the first sliding portions 52a and 52b can be easily machined, as well as provide stable guides for the interlock member 40.

Also, in the example embodiment, the guide portion 51 on the one side slidably engages near the select operation input portion 44 so the guide portion 51 on the one side reliably takes the operating force applied to that select operation input portion 44. Moreover, the select operation input portion 44 is sandwiched between the case members 10A and 10B from both sides in the axial direction and is therefore restricted from moving in the axial direction, which even more effectively prevents the interlock member 40 from leaning in the axial direction.

Next, the transmission case 10 has the first sliding portions 52a and 52b on the radial inside which slidably engage with the pair of shift operation restricting portions 41 and 42 of the interlock member 40 on the circumference of the first radius r1, and the guide portion 51 one the one side and the second sliding portion 52c on the radial outside which slidably engage with the select operation input portion 44 of the interlock member 40 on the circumference of the second radius r2 which is larger than the first radius r1. In addition, suppressing the movement of the interlock member 40 in the direction in which it leans from operating force applied to the select operation input portion 44 using the guide portion 51 on the one side with the larger radius and the first sliding portions 52a and 52b on the other side reduces the contact pressure between the interlock member 40 and the guide portion 51 on the one side, which reliably inhibits the interlock member 40 from leaning.

More specifically, in this example embodiment, the select operation input portion 44 is operated by the inner select lever 36 which rotates about an axis that is perpendicular to the shift select shaft 14 on the other side of the butt surface Fc. As a result, the interlock member 40 is pushed in a direction in which it would lean in the axial direction of the shift select shaft 14 from the inner select lever 36 side. However, the guide portion 51 on the one side and the guide portion 52 on the other side only allow the interlock member 40 to rotate on their sliding planes. Therefore, the twisting phenomenon in which the interlock member 40 that rotates (pivots) or tilts in the select direction also leans in the axial direction tends not to occur, thereby solving the problem of rattling in the select direction, which occurs due to a change in the engagement posture of the spherical engaging portion 36a on the tip end of the inner select lever 36 and the operation input surfaces 44a and 44b of the interlock member 40 that sandwich that spherical engagement portion 36a.

In this way, according to the operating mechanism of the manual transmission of this example embodiment, the interlock member 40 is guided in a posture perpendicular to the axis of the shift select shaft 14 by the guide portion 52 on the other side near the pair of shift operation restricting portions 41 and 42 and the select operation input portion 44 from the other side in the axial direction. Therefore, the interlock member 40, which transmits operating force in the select direction, can be reliably prevented from leaning in the axial direction without requiring more select operating force. As a result, an operating mechanism of a manual transmission can be provided which has a superb shift feel and minimized rattling due to play in the operating lever, and more specifically, rattling in the select direction after a shift.

Incidentally, in the example embodiment described above, the guide portions on both sides serve as sliding portions that slidably engage with both sides of the interlock member 40. However, a guide portion may also be formed in which, instead of or in addition to these sliding portions, a plurality of rolling members, such as three balls (hard spheres), are provided between one side of the interlock member 40 and the transmission case 10, and the interlock member 40 is pushed by a spring on the side where it supported at three points by these rolling members from the other side. Also, the first sliding portions 52a and 52b are formed by two sliding portions that are distanced from one another on the same circumference, but they may also be formed integrally with one another as an arc-shaped sliding portion. Further, in the example embodiment described above, the first sliding portions 52a and 52b that form the guide portion 52 on the other side are arranged on the same plane as the butt surface Fc of the case member on the other side (see FIG 2). Alternatively, however, the first sliding portions 52a and 52b and the second sliding portion 52c may be in positions that are not in line with the butt surface Fc, and the sliding surface that forms the guide portion 51 on the one side may be positioned on the same plane as the butt surface Fc. Of course, the sliding surfaces that form the guide portions 51 and 52 may also be in positions near but not in line with the butt surface Fc. As described above, a plurality of sliding portions may also be provided on the guide portion 51 on the one side.

In the operating mechanism of a manual transmission according to the invention, the interlock member is guided in a posture perpendicular to the shift select shaft by the guide portion on one side from one side in the axial direction of the shift select shaft, and by the guide portion on the other side from the other side in the axial direction of the shift select shaft. Therefore, the interlock member, which transmits operating force in the select direction, can be reliably prevented from leaning in the axial direction without requiring more select operating force. As a result, an operating mechanism of a manual transmission which has a superb shift feel and in which rattling caused by play in the operating lever, particularly rattling in the select direction after a shift, is minimal can be provided. Thus, the invention is useful for operating mechanisms of manual transmissions which select and shift (i.e., operate) one of a plurality of shift fork shafts in response to operation of an operating lever in the shift direction and the select direction, and more particularly, to operating mechanisms of manual transmissions in general which are provided with an interlock member for preventing double engagement on the gear side.

## Claims

1. An operating mechanism of a manual transmission, which includes a transmission case (10); a plurality of shift fork shafts (11, 12, 13), each of which has a shift fork (21, 22, 23) and a shift head portion (24, 25, 26), which are arranged parallel to each other inside the transmission case (10); a shift select shaft (14) which is operated in an axial direction by operational input in a shift direction, and operated in a rotational direction by operational input in a select direction; an inner lever (15) which is fixed to the shift select shaft (14) so as to protrude perpendicular to the axis thereof and engages with one of the shift head portions (24, 25, 26) of the plurality of shift fork shafts (11, 12, 13) according to the operating position of the shift select shaft (14) in the rotational direction; and an interlock member (40) which restricts the shift head portions (24, 25, 26) other than the one shift head portion (24, 25, 26) from being erroneously operated in the axial direction from a neutral position by the inner lever (15) when the shift select shaft (14) is operated in the axial direction by operational input in the shift direction,
wherein a guide portion on one side, which engages with the interlock member (40) from one side in the axial direction of the shift select shaft (14), is provided on the transmission case (10), and a guide portion on the other side, which engages with the interlock member (40) from the other side in the axial direction of the shift select shaft (14), is provided on the transmission case (10); and the interlock member (40) is guided in a posture perpendicular to the shift select shaft (14) by the guide portion on the one side and the guide portion on the other side;
wherein the interlock member (40) includes i) a pair of shift operation restricting portions (41, 42) arranged adjacent to, with one on either side of, the inner lever (15) in the rotational direction of the shift select shaft (14) so as to engage with one of the shift head portions (24, 25, 26), ii) a connecting portion (43) that connects both of the shift operation restricting portions (41, 42) together, and iii) a select operation input portion which is fixed to the connecting portion (43) and operated in the rotational direction; and at least one of the guide portion on the one side and the guide portion on the other side is slidably engaged with the interlock member (40) near to the pair of shift operation restricting portions (41, 42) and the select operation input portion (44) of the interlock member (40);
wherein the transmission case (10) is formed by a case member (10A) on one side, which includes the guide portion on the one side, and a case member (10B) on the other side, which includes the guide portion on the other side; and the guide portion on the one side and the guide portion on the other side are positioned near to a butt surface of the case member (10A) on the one side and the case member (10B) on the other side;
wherein one of the guide portion on the one side and the guide portion on the other side is formed by i) a first sliding portion (52a, 52b) that protrudes toward the interlock member (40) from the case member (10B) on the other side so as to slidably engage with the pair of shift operation restricting portions (41, 42) of the interlock member (40); and ii) a second sliding portion (52c) formed near to an outer peripheral wall of the case member (10B) on the other side so as to slidably engage with the select operation input portion (44) of the interlock member (40);
and wherein the first sliding portion (52a, 52b) is formed by a pair of protrusions which are positioned on a rib (55) formed on the case member (10B) on the other side near to the butt surface and which slidably engage with the pair of shift operation restricting portions (41, 42) of the interlock member (40).

2. The operating mechanism according to claim 1, **characterized in that** the pair of protrusions are positioned on the same circumference.

3. The operating mechanism according to claim 1 or claim 2, **characterized in that** the guide portion on the one side slidably engages near to the select operation input portion (44).

4. The operating mechanism according to any one of claims 1 through 3, **characterized in that** the transmission case (10) includes a radial inner sliding portion (52a, 52b) that slidably engages with the pair of shift operation restricting portions (41, 42) of the interlock member (40) on a circumference of a first radius, and a radially outer sliding portion (52c) that slidably engages with the select operation input portion (44) of the interlock member (40) on a circumference of a second radius that is larger than the first radius.

5. The operating mechanism according to any one of claims 1 through 4, **characterized in that** the select operation input portion (44) is operated by a select lever (32, 36) that rotates about an axis that is perpendicular to the shift select shaft (14) from the other side of the butt surface.

## Patentansprüche

1. Betätigungsmechanismus eines Handschaltgetriebes, welches ein Getriebegehäuse (10), eine Mehrzahl an Schaltgabelwellen (11, 12, 13), von denen jede eine Schaltgabel (21, 22, 23) und einen Schaltkopfabschnitt (24, 25, 26), welche parallel zu einander in dem Getriebegehäuse (10) angeordnet sind, hat, eine Schalt-Wähl-Welle (14), die in einer Axialrichtung durch eine betätigende Eingabe in einer Schaltrichtung betätigt wird und in einer Rotationsrichtung durch eine betätigende Eingabe in einer Wählrichtung betätigt wird, einen inneren Hebel (15), welcher an der Schalt-Wähl-Welle (14) befestigt ist, so dass dieser senkrecht zu der Achse davon auskragt und mit einem der Schaltkopfabschnitte (24, 25, 26) der Vielzahl an Schaltgabelwellen (11, 12, 13) gemäß der Betätigungsposition der Schalt-Wähl-Welle (14) in der Rotationsrichtung in einer Wirkverbindung steht, und ein Verriegelungsteil (40), welches die anderen Schaltkopfabschnitte (24, 25, 26) als den einen Schaltkopfabschnitt (24, 25, 26) darin beschränkt, in fehlerhafter Weise in der Axialrichtung von einer neutralen Position aus durch den inneren Hebel (15) betätigt zu werden, wenn die Schalt-Wähl-Welle (14) in der Axialrichtung durch eine betätigende Eingabe in der Schaltrichtung betätigt wird, aufweist,
wobei ein Führungsabschnitt an einer Seite, welcher mit dem Verriegelungsteil (40) von einer Seite in der Axialrichtung der Schalt-Wähl-Welle (14) in einer Wirkverbindung steht, an dem Getriebegehäuse (10) vorgesehen ist, und ein Führungsabschnitt an der anderen Seite, welcher mit dem Verriegelungsteil (40) von der anderen Seite in der Axialrichtung der Schalt-Wähl-Welle (14) in einer Wirkverbindung steht, an dem Getriebegehäuse (10) vorgesehen ist; und das Verriegelungsteil (40) in einer Stellung senkrecht zu der Schalt-Wähl-Welle (14) durch den Führungsabschnitt an der eine Seite und den Führungsabschnitt an der anderen Seite geführt ist;
wobei das Verriegelungsteil (40) i) ein Paar von Schaltbetätigungs-Beschränkungsabschnitten (41, 42), welche benachbart zu dem inneren Hebel (15) in der Rotationsrichtung der Schalt-Wähl-Welle (14) mit einem an jeder Seite davon angeordnet sind, so dass diese mit einem der Schaltkopfabschnitte (24, 25, 26) in Wirkverbindung stehen, und ii) einen Verbindungsabschnitt (43), welcher beide Schaltbetätigungs-Beschränkungsabschnitte (41, 42) miteinander verbindet, und iii) einen Wählbetätigungs-Eingabeabschnitt, welcher an dem Verbindungsabschnitt (43) befestigt ist und in der Rotationsrichtung betätigt wird, aufweist; und zumindest einer der Führungsabschnitte von dem Führungsabschnitt an der einen Seite und dem Führungsabschnitt an der anderen Seite gleitend mit dem Verriegelungsteil (40) nahe dem Paar Schaltbetätigungs-Beschränkungsabschnitte (41, 42) und dem Wählbetätigungs-Eingabeabschnitt (44) des Verriegelungsteils (40) in Wirkverbindung steht;
wobei das Getriebegehäuse (10) durch ein Gehäuseteil (10A) an einer Seite, welche den Führungsabschnitt an der einen Seite aufweist, und durch ein Gehäuseteil (10B) an der anderen Seite, welche den Führungsabschnitt an der anderen Seite aufweist, gebildet wird; und der Führungsabschnitt an der einen Seite und der Führungsabschnitt an der anderen Seite nahe einer Stoßoberfläche des Gehäuseteils (10A) an der einen Seite und des Gehäuseteils (10B) an der anderen Seite positioniert sind;
wobei ein Führungsabschnitt von dem Führungsabschnitt an der einen Seite und dem Führungsabschnitt an der anderen Seite durch i) einen ersten Gleitabschnitt (52a, 52b), welcher zu dem Verriegelungsteil (40) hin von dem Gehäuseteil (10B) an der anderen Seite auskragt, so dass dieser mit dem Paar Schaltbetätigungs-Beschränkungsabschnitte (41, 42) des Verriegelungsteils (40) gleitend in Wirkverbindung steht; und durch ii) einen zweiten Gleitabschnitt (52c), welcher nahe an einer äußeren peripheren Wand des Gehäuseteils (10B) an der anderen Seite gebildet ist, so dass dieser mit dem Wählbetätigungs-Eingabeabschnitt (44) des Verriegelungsteils (40) gleitend in Wirkverbindung steht, gebildet wird;
und wobei der erste Gleitabschnitt (52a, 52b) durch ein Paar Auskragungen gebildet wird, welche an einer Rippe (55) positioniert sind, die an dem Gehäuseteil (10B) an der anderen Seite nahe der Stoßoberfläche gebildet ist, und welche mit dem Paar Schaltbetätigungs-Beschränkungsabschnitte (41, 42) des Verriegelungsteils (40) gleitend in Wirkverbindung stehen.

2. Betätigungsmechanismus nach Anspruch 1, **dadurch gekennzeichnet, dass** das Paar Auskragungen an demselben Umfang positioniert ist.

3. Betätigungsmechanismus nach Anspruch 1 oder Anspruch 2, **dadurch gekennzeichnet, dass** der Führungsabschnitt an der einen Seite nahe dem Wählbetätigungs-Eingabeabschnitt (44) gleitend in Wirkverbindung steht.

4. Betätigungsmechanismus nach einem der Ansprüche 1 bis 3, **dadurch gekennzeichnet, dass** das Getriebegehäuse (10) einen radial innenliegenden Gleitabschnitt (52a, 52b), welcher mit dem Paar Schaltbetätigungs-Beschränkungsabschnitte (41, 42) des Verriegelungsteils (40) an einem Umfang eines ersten Radius gleitend in Wirkverbindung steht, und einen radial außenliegenden Gleitabschnitt (52c), welcher mit dem Wählbetätigungs-Eingabeabschnitt (44) des Verriegelungsteils (40) an einem Umfang eines zweiten Radius, der größer als der erste Radius ist, gleitend in Wirkverbindung steht, aufweist.

5. Betätigungsmechanismus nach einem der Ansprüche 1 bis 4, **dadurch gekennzeichnet, dass** der Wählbetätigungs-Eingabeabschnitt (44) durch einen Wählhebel (32, 36) betätigt wird, der um eine Achse rotiert, die sich senkrecht zu der Schalt-Wähl-Welle (14) befindet ,und zwar von der anderen Seite der Stoßoberfläche.

## Revendications

1. Mécanisme de fonctionnement d'une transmission manuelle, qui comprend un carter de transmission (10) ; une pluralité d'abres de fourchette de changement de vitesses (11, 12, 13), présentant chacun une fourchette de changement de vitesses (21, 22, 23) et une partie tête de changement de vitesses (24, 25, 26), qui sont agencés parallèlement les uns aux autres à l'intérieur du carter de transmission (10) ; un abre de sélection et de changement de vitesses (14) qui est actionné dans une direction axiale par le biais d'une opération d'actionnement dans une direction de changement de vitesses, et est actionné dans une direction de rotation par le biais d'une opération d'actionnement dans une direction de sélection ; un levier interne (15) qui est fixé à l'abre de sélection et de changement de vitesses (14) de manière à faire saillie perpendiculairement à son axe et vient en prise avec l'une des parties têtes de changement de vitesses (24, 25, 26) de la pluralité d'abres de fourchette de changement de vitesses (11, 12, 13) en fonction de la position d'actionnement de l'abre de sélection et de changement de vitesses (14) dans la direction de rotation ; et un élément d'interverrouillage (40) qui limite un actionnement incorrect des parties têtes de changement de vitesses (24, 25, 26) autres que ladite partie tête de changement de vitesses (24, 25, 26) dans la direction axiale à partir d'une position neutre par le levier interne (15) lorsque l'abre de sélection et de changement de vitesses (14) est actionné dans la direction axiale par une opération d'actionnement dans la direction de changement de vitesses,
une partie guide d'un côté, qui vient en prise avec l'élément d'interverrouillage (40) depuis un côté dans la direction axiale de l'abre de sélection et de changement de vitesses (14), étant prévue sur le carter de transmission (10), et une partie guide de l'autre côté, qui vient en prise avec l'élément d'interverrouillage (40) depuis l'autre côté dans la direction axiale de l'abre de sélection et de changement de vitesses (14), étant prévue sur le carter de transmission (10) ; et l'élément d'interverrouillage (40) étant guidé dans une position perpendiculaire à l'abre de sélection et de changement de vitesses (14) par la partie guide d'un côté et la partie guide de l'autre côté ;
l'élément d'interverrouillage (40) comprenant i) une paire de parties de limitation d'actionnement de changement de vitesses (41, 42) disposées à proximité, une de chaque côté, du levier interne (15) dans la direction de rotation de l'abre de sélection et de changement de vitesses (14) de façon à venir en prise avec l'une des parties têtes de changement de vitesses (24, 25, 26), ii) une partie de raccord (43) qui raccorde l'une à l'autre les deux parties de limitation d'actionnement de changement de vitesses (41, 42), et iii) une partie d'opération d'actionnement de sélection qui est fixée à la partie de raccord (43) et actionnée dans la direction de rotation ; et au moins l'une de la partie guide d'un côté et la partie guide de l'autre côté venant en prise par coulissement avec l'élément d'interverrouillage (40) près de la paire de parties de limitation d'actionnement de changement de vitesses (41, 42) et de la partie d'opération d'actionnement de sélection (44) de l'élément d'interverrouillage (40) ;
le carter de transmission (10) étant formé par un élément de carter (10A) d'un côté, qui comprend la partie guide d'un côté, et un élément de carter (10B) de l'autre côté, qui comprend la partie guide de l'autre côté ; et la partie guide d'un côté et la partie guide de l'autre côté étant positionnées près d'une surface de butée de l'élément de carter (10A) d'un côté et l'élément de carter (10B) de l'autre côté ;
l'une de la partie guide d'un côté et de la partie guide de l'autre côté étant formée par i) une première partie coulissante (52a, 52b) qui fait saillie vers l'élément d'interverrouillage (40) à partir de l'élément de carter (10B) de l'autre côté de manière à venir en prise par coulissement avec la paire de parties de limitation d'actionnement de changement de vitesses (41, 42) de l'élément d'interverrouillage (40) ; et ii) une seconde partie coulissante (52c) formée près d'une paroi périphérique extérieure de l'élément de carter (10B) de l'autre côté de manière à venir en prise par coulissement avec la partie d'opération d'actionnement de sélection (44) de l'élément d'interverrouillage (40) ;
et la première partie coulissante (52a, 52b) étant formée par une paire de protubérances qui sont positionnées sur une côte (55) formée sur l'élément de carter (10B) de l'autre côté près de la surface de butée et qui viennent en prise par coulissement avec la paire de parties de limitation d'actionnement de changement de vitesses (41, 42) de l'élément d'interverrouillage (40).

2. Mécanisme de fonctionnement selon la revendication 1, **caractérisé en ce que** la paire de protubérances sont positionnées sur la même circonférence.

3. Mécanisme de fonctionnement selon la revendication 1 ou la revendication 2, **caractérisé en ce que** la partie guide d'un côté vient en prise par coulissement près de la partie d'opération d'actionnement de sélection (44).

4. Mécanisme de fonctionnement selon l'une quelconque des revendications 1 à 3, **caractérisé en ce que** le carter de transmission (10) comprend une partie coulissante radialement interne (52a, 52b) qui vient en prise par coulissement avec la paire de parties de limitation d'actionnement de changement de vitesses (41, 42) de l'élément d'interverrouillage (40) sur une circonférence d'un premier rayon, et une partie coulissante radialement externe (52c) qui vient en prise par coulissement avec la partie d'opération d'actionnement de sélection (44) de l'élément d'interverrouillage (40) sur une circonférence d'un second rayon qui est supérieur au premier rayon.

5. Mécanisme de fonctionnement selon l'une quelconque des revendications 1 à 4, **caractérisé en ce que** la partie d'opération d'actionnement de sélection (44) est actionnée par le biais d'un levier de sélection (32, 36) qui tourne autour d'un abre qui est perpendiculaire à l'abre de sélection et de changement de vitesses (14) depuis l'autre côté de la surface de butée.
